Europäisches Patentamt

European Patent Office

Office européen des brevets

(19)

(11) Publication number : **0 127 222**
**B1**

# EUROPEAN PATENT SPECIFICATION

(12)

(45) Date of publication of patent specification :
01.10.86

(51) Int. Cl.⁴ : **B 29 C 67/20**

(21) Application number : **84200633.0**

(22) Date of filing : **03.05.84**

(54) **Method and device for securing elastic slabs to each other.**

(30) Priority : **10.05.83 NL 8301667**

(43) Date of publication of application :
**05.12.84 Bulletin 84/49**

(45) Publication of the grant of the patent :
**01.10.86 Bulletin 86/40**

(84) Designated contracting states :
**DE FR GB NL**

(56) References cited :
**DE-A- 1 652 399**
**DE-A- 1 932 582**
**US-A- 3 734 811**
**US-A- 3 819 448**

(73) Proprietor : **Datawell B.V.**
**Zomerluststraat 4**
**NL-2012 LM Haarlem (NL)**

(72) Inventor : **Smits, Willem Adrianus**
**Halbertsmastraat 78**
**NL-2035 CJ Haarlem (NL)**

(74) Representative : **de Wit, Gerard Frederik, Ir. et al**
**Octrool- en Merkenbureau De Wit B.V. Breitnerlaan 146**
**NL-2596 HG Den Haag (NL)**

## Description

The invention relates to a method for securing slabs of elastic material to each other, in which the slabs are positioned with their surfaces engaging each other for realizing an adhesion and in which the slabs are pressed against each other, such that at least one slab is subjected to a deformation of its shape, with respect to a stress-free condition at a predetermined temperature because of the pressure with which it is pressed against the other slab and/or heating of its surface directed toward the other slab, which deformation differs from the one that occurs by the same causes in the surface of the other slab directed toward it.

When positioning slabs against each other for securing them to each other by adhering, welding or such like, the two slab surfaces that have to be secured to each other mostly have an unequal deformation, by reason of which the unit formed by two slabs may warp.

This can easily be understood if one surmises, that in a predetermined direction the one slab was more deformed than the other, wherewith as an example elongation is considered. This means that after the adhesion the slab which showed more elongation than the other will shrink and consequently will get a smaller length than the other, wherewith the other slab also will be shortened a little at the adhesion surface of both slabs, but of course lesser at the other side, so that a total deformation comes to existance wherewith in the thickness direction through the block of slabs the first slab will have at its side reverted from the other slab a residual elongation whereas the other slab will have less shrink at its side reverted from the first slab than at the side of this slab secured to the first slab.

Hereof follows that from the one side of a double set of slabs to the other the original length of the slabs is shortened more and more, so that the double set of slabs warps.

If a slab has to be secured to another slab generally it is necessary that at least one of the slabs is curved in order to obtain the free space for for instance a welding nozzle and to press them progressively on each other.

This is known in different ways from the US-A-3 819 448 and the DE-A-1 652 399 and 1 932 582.

In case both slabs have the same thickness and are made of the same material the possibility exists to give them the same curvature, by reason of which after they have been assembled and adhered to each other a whole is created in which in both the surfaces to be adhered to each other the deformation is the same, so that after the adhesion no stress will occur and no warping of the slab needs to occur.

US-A-3 734 811 shows such an assembling of two slabs in the upper part of fig. 1, but the lower part of the same figure, in which a single slab and a double slab are adhered to each other, shows clearly that there the warping problem has neither been conceived nor solved.

Also with unequal thicknesses and unequal characteristics of the material often it is possible to equalize the elongations in both surfaces to be adhered to each other by means of a suitable feeding configuration.

The stresses which generally appear in slabs which under pressure are adhered to each other are in first instance a certain elongation which occurs because the slabs are compressed in their thickness direction. Further the curvature of the slabs will cause the introduction of a certain elongation in the surface of the slab that is directed toward the other slab. A further reason why an elongation can occur in the surface of the slab that is directed toward the other slab is that for some processes the surface of the slab has to be heated, for instance for realizing a weld.

This way of handling, namely to lay slabs of equal thickness on each other with equal curvature and subjected to equal conditions, is, however, not applyable in case one wants to make a block of slabs containing more than two slabs, because then, when applying the third slab on the first set of two with equal curvature of the third slab at the one hand and the block of the first and second slabs at the other hand unequal elongations occur. Though empirically or theoretically can be ascertained which radii of curvature of the single slab at the one hand and the double slab at the other hand will show equal elongations, such a procedure leads to continuous adjustment of the apparatus and consequently is complicated. A further complication is that the compression force, for instance by means of a pressure roll which works on two slabs the one laying on top of the other will not induce the same elongation in both slabs.

The invention aims to provide a method with which in a simple and efficient way it is possible to adhere slabs to each other without warping, also if both slabs to be adhered to each other have unequal thicknesses for instance if one slab consists of two or more slabs already adhered to each other and the other is a single slab.

According the invention the above aim is attained in that it is provided that additionally such forces are exerted in the direction of the surface of the slabs that the said deformations mutually are equal.

Because in general deformations occurring with slabs laying on each other are elongation deformations it is a preferred embodiment of the invention, provided that the deformations are elongations, that a compression force is exerted on the slab having the greatest elongation in the related surface. When applying the method according to the invention such that a curved slab is joined to another one and is progressively pressed on the other one, a compression force is exerted in the direction of this progression on the slab having the larger elongation.

The exertion of the compression force can take place with the aid of at least one friction roll.

An other practical method for exerting a compression force exists in that a pushing member works on the edge of a slab.

Because when applying the invention it is possible to restrict by compression forces the elongation, if any, which is caused by heating, with the invention it is possible to use a welding processus, even if the slabs are unequally heated, for instance by means of a heated gas or a heat radiator, or show mutually different dilatations.

As has earlier been mentioned the invention is particularly suitable for forming a block out of more than two slabs. Therewith preferably things are carried out in such a way that one slab is flatly supported, a slab in curved condition is progressively laid against it and under exertion of a compression force in the direction along the line of the progression until these two slabs are adhered to each other, a third slab is progressively laid on the second one and pressed under exertion of a compression force along the line of progression and so on until a block is formed consisting of slabs flatly secured to each other.

Because herewith the successive slabs always are subjected to the same deformations and force activity and the deformations of slabs already secured to each other at the location where they are adhered to the next slab are the same, regardless of how many slabs have already been secured to each other, in this way without practically any adjustment of the compression force or suchlike a block of sandwiched slabs is obtained that hardly shows any tendency to warp.

The invention also provides a device for securing two or more slabs of elastic material to each other, which device is provided with a plane support surface. The device according to the invention is characterized by a stopping plane and a chariot which runs on a support which is parallel to said support surface, which chariot has a supporting surface tilting in its travelling direction and a pressure roll, a device for generating a force which is connected to a border member, which can cooperate with can edge of a slab and which can slide on the tilting support surface, the chariot being able to move away under a slab laying partly on the tilting support surface.

Because the slab on the tilting surface of the support on the one hand lies against the stopping plane and at the other hand is subjected to the border member, the slab is subjected to a compression force which compensates the elongation which is caused by the curvature of the slab where it comes from the tilting surface on to the flat lower slab and which is created by the pressure roll.

Of course it is herewith possible to make use of one or more driving rolls wherewith according to a special aspect of the invention it is provided that these rolls push themselves against the related slab and in that way drive the chariot.

With this embodiment space is available to heat the slab at the location where it engages the other slab, for instance with a nozzle for directing heated gas, for instance hot air on the slab. Of course also use can be made of a heater.

A simple embodiment with which easily can be worked on if a slab has been applied consists in that the supporting surface and the support on which the chariot runs are adjustable with respect to each other in the direction perpendicular to said support surface.

The invention is further elucidated on hand of the drawing, in which :

figure 1 shows a scheme for elucidating the deformations that occur if a slab is added to a slabblock and a pressure roll has been used therewith ;

figure 2 corresponds to figure 1, but indicates the deformations which occur if the slab is simultaneously subjected to a compression force ;

figure 3 shows schematically a device for applying the invention.

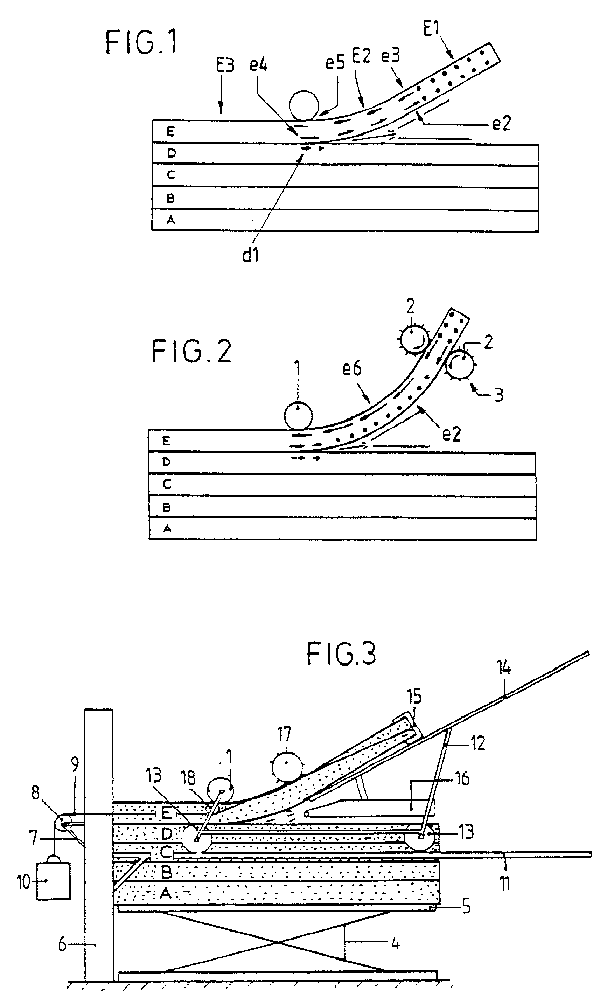

In figure 1 with A, B, C, D and E five slabs have been indicated of which the slabs A, B, C and D are already secured to each other. The slab E is adhered to the slab D, wherewith it is kept in the shown position, that is to say an undeformed oblique part E1, a part E2 bent with a practically fixed radius of curvature and a part E1 laying flat on the slab D. Further a pressure roll 1 has been indicated.

The working now is such that firstly the slab E with only one end lays on slab D and that the pressure roll is fully located at the left side, after which the support of the slab E shifts toward the right, simultaneously with the pressure roll 1. Because the slabs have been brought in a condition in which they adhere to each other, for instance provided with glue or sufficiently heated, an adhesion will occur of the lower side of slab E to the upper side of slab D.

In slab E and slab D the deformation occurring with this working have been indicated, wherewith an arrow toward the right means elongation and an arrow toward the left points to compression. The elongation in the slab D indicated with the small arrows d1 is caused by the pressure roll 1. This elongation is largest immediately below the roll and decreases rapidly toward the sides.

In the slab E one has the elongations e2, which are caused by the curvature as well as the compression e3, which also is caused by the curvature. Below the roll 1 one has at the under side a greater elongation e4, which is caused there by superposition of the elongation caused by the pressure roll and that caused by the curvature, whereas in the upper side one has a compression e5, which is somewhat smaller than the compression e3, because there the elongation caused by the pressure roll is subtracted therefrom.

In figure 2 a pair of driven rolls 2 have been mounted which have a friction increasing surface as schematically has been indicated with prickles. These rolls exert such a compression force that the elongation e2 caused by the curvature is completely compensated. This has been indicated with dots. At the upper side one has a compression e6 which is composed of the compression by curvature and the compression exerted by the rolls 2.

Clearly is visible that below pressure roll 1 the resulting elongation in the lower surface of upper slab E equals that in the upper surface of slab D. If now these slabs have been adhered to each other they can relax without creating any stress, so that no warping occurs.

Of course herewith also heating of one or both slabs can be applied, provided the compression force exerted by rolls 2 is such that the elongation in both surfaces becomes the same.

In figure 3 an embodiment of a device for applying the method has been shown.

A cross-link elevator table 4 supports a support surface 5 on which the slabs A, B, C and D lay which are already secured to each other. To the left of the cross-link elevator table a stopping plate 6 is present, the slabs A, B, C and D laying against it. Further to a console 7 a string disc 8 is mounted over which a string 9 runs, which bears a weight 10. On a pair of rails 11 a chariot 12 runs, which has two pairs of wheels 13 and supports a tilting support surface 14, which ends at its lower side in such a way that below this support surface an open space is available, which chariot further supports a pressure roll 1.

The string 9 is further guided over a string disc 18 and connected to a pushing border member 15. A heating device such as a nozzle 16 for hot air is also attached to the chariot. Finally a driving roll 17 takes care to exert a lengthwise force on the chariot, wherewith the chariot pushes itself with respect to slab E.

If the weight 10 is adjusted to its right value, after the cross-link elevator table has been lifted over three thicknesses of the slabs A, B, and C, the slab A has been laid on the cross-link elevator table and the slab B on the chariot 12, when the latter has been moved toward the left such that the end of slab B just engages stopping plate 6. After this the pressure roll is moved toward the right together with the chariot because drive roll 17 is driven. The result is that slab B is secured to slab A. This processes is repeated for slab C and slab D and finally slab E.

Of course it is possible that the table is adjustable as well as the rails.

By application of the invention it is possible to adhere slabs to each other without inducing stresses in the formed slab blocks, so that the block does not show tendency to warp. Therewith the invention provides a compensation, with which preferably compression forces are used. The application of reproduceable compression forces is relatively simple. According to a preferred embodiment of the invention it is provided, that in a slab to be laid on a block such like deformations are introduced that the elongation at the location of adherence equals the elongation introduced by the pressure on the upper side of the slab laying below it.

In this case in an easy way a good compensation is obtained and a block consisting of a number of slabs can be formed without adjustment of the radius of curvature and/or the compression forces.

The invention is specially applyable to the manufacture of blocks of foam slabs of for instance polyethylene. Such slabs can only be obtained in restricted thicknesses (max. ± 8 cm), so that a relatively large number of slabs have to be laid on each other when blocks are needed with a thickness of for instance 50 cm.

It will be clear, however, that the invention is not limited to such an application : everywhere where from elastic material surfaces have to be adhered to each other the invention can be of great use to obtain a guarantee for a practically stress-free whole.

Of course the invention is also applyable for slabs of different material and possibly with different elastical characteristics. If the deformation in surfaces to be adhered to each other is mutually equal at the moment of adherence, no residual stress will occur by adhering the slabs to each other.

Though in general it will not conduct to a simplification the invention can also be applied by introducing an additional elongation in one of the slabs.

The roll 1 can be floatingly mounted so that a constant force is exerted on the upper slab. It is also possible to give the roll a fixed possibly adjustable height, by reason of which always the same indentation of the slabs can be realized.

## Claims

1. Method for securing slabs (E, D) of elastic material to each other, in which the slabs are positioned with their surfaces engaging each other for realizing an adhesion and in which the slabs are pressed against each other so that at least one slab (E) is subjected to a deformation (e2, e4) of its shape with respect to a stress-free condition at a predetermined temperature because of the pressure with which it is pressed against the other slab (D) and/or heating of its surface directed toward the other slab (D), which deformation differs from the one (e3, e5) that occurs by the same causes in the surface of the other slab directed toward it, characterized in that additionally such forces are exerted in the direction of the surface of the slabs that the said deformations mutually are equal.

2. Method according to claim 1, characterized in that if the deformations are elongations a compression force is exerted on the slab (E) having the greatest elongation in the related surface.

3. Method according to claim 1 or 2 in which a slab (E) is fed in bent condition toward the other one and progressively pressed on the other one, characterized in that on the curved slab a compression force is exerted in the direction along the line of the progression.

4. Method according to claim 1, 2 or 3, characterized in that the additionally exerted forces are created by at least one driven friction roll (2, 17).

5. Method according to one or more of the preceding claims, characterized in that a pushing member (15) acts on the edge of one slab (E).

6. Method according to one or more of the preceding claims, characterized in that a heated gas is blown against at least one slab surface.

7. Method according to one or more of the preceding claims, for securing more than two slabs to each other, characterized in that one slab (A) is flatly supported, a slab (B) in curved condition is progressively laid against it and under exertion of a compression force in the direction along the line of the progression until these two slabs (A, B) are adhered to each other, a third slab (C) is progressively laid on the second one (B) and pressed under exertion of a compression force along the line of progression and so on until a block (A, B, C, D, E) is formed consisting of slabs flatly secured to each other.

8. Device for securing two or more slabs (A, B, C, D, E) of elastic material to each other provided with a plane support surface (5) characterized by a stopping plane (6) and a chariot (12) which runs on a support (11) which is parallel to said support surface (5), which chariot (12) has a supporting surface (14) tilting in its travelling direction and a pressure roll (1), a device (7, 8, 9, 10) for generating a force being provided which is connected to a border member (15), which can cooperate with an edge of a slab (E) and which can slide on the tilting support surface (14), the chariot being able to move away under a slab (E) laying partly on the tilting support surface.

9. Device according to claim 8, characterized in that the chariot (12) is provided with a drive roll (17) which pushes the chariot away against the slab (E) laying on it.

10. Device according to claim 8 or 9, characterized in that the chariot (12) supports a blowing nozzle (16) or a radiator for heating the lower side of the slab (E) laying on the chariot (12) and the upper side of the slab (D) laying there below, such that the slabs (E, D) are heated when they engage each other.

11. Device according to one or more of the preceding claims, characterized in that the support surface (5) and the support (11) on which the chariot runs are adjustable with respect to each other in the direction perpendicular to the support surface (5).

12. Device according to one or more of the preceding claims 8-11, characterized in that a pressure roll (1) is vertically movably attached to said chariot (12).

13. Device according to one or more of the preceding claims 8-11, characterized in that a pressure roll (1) is fixedly attached to said chariot (12).

**Patentansprüche**

1. Verfahren zum Aufeinanderheften elastischer Platten (E, D) in welchem die Platten mit ihren Oberflächen in gegenseitiger Berührung angeordnet um die Aufeinanderheftung zu bewirken und aufeinander gepresst werden, derart dass wenigstens eine Platte (E) einer Deformierung (e2, e4) seiner Form hinsichtlich ihrer Spannungsfreien Zustand bei einer vorbestimmten Temperatur ausgesetzt wird, durch die Druck mit welcher sie auf die andere Platte (D) gepresst wird und/oder Erwärmung ihrer Oberfläche die zu der anderen Platte (D) gerichtet ist, welche Deformierung differiert derjeniger (e3, e5) die durch dieselbe Ursachen in der zu ihr gerichteten Oberfläche der anderen Platte eintritt, dadurch gekennzeichnet, dass zusätzlich derartige Kräfte in der Richtung der Oberfläche der Platten ausgeübt werden, dass die genannten Deformierungen einander gleich sind.

2. Verfahren nach Anspruch 1, dadurch gekennzeichnet, dass wenn die Deformierungen Erlängerungen sind eine Kompressionskraft auf die Platte (E), die die grösste Erlängerung in der diesbezüglichen Oberfläche zeigt, ausgeübt wird.

3. Verfahren nach Anspruch 1 oder 2, in welchem eine Platte (E) in gebogener Lage die Andere entgegen geführt wird und fortschreitend auf die Andere gepresst wird, dadurch gekennzeichnet, dass auf die gebogene Platte eine Kompressionskraft in der Zuführungsrichtung ausgeübt wird.

4. Verfahren nach Anspruch 1, 2 oder 3, dadurch gekennzeichnet, dass die zusätzlich ausgeübten Kräften von wenigstens einer angetriebenen Reibungswalze (2, 17) hervorgerufen werden.

5. Verfahren nach einem oder mehreren der vorangehenden Ansprüchen, dadurch gekennzeichnet, dass ein Schubteil (15) auf den Rand einer Platte (E) einwirkt.

6. Verfahren nach einem oder mehreren der vorangehenden Ansprüchen, dadurch gekennzeichnet, dass ein erhitztes Gas auf wenigstens eine Platteoberfläche geblasen wird.

7. Verfahren nach einem oder mehreren der vorangehenden Ansprüchen zum Aufeinanderheften von mehr als zwei Platten, dadurch gekennzeichnet, dass eine Platte (A) flach unterstützt wird, eine Platte (B) in gebogener Lage fortschreitend gegen sie gelegt wird unter Ausübung einer Kompressionskraft in der Richtung der Fortschreitung bis diese beiden Platten (A, B) aufeinander geheftet worden sind, eine dritte Platte (C) fortschreitend auf die zweite (B) gelegt und unter Ausübung einer Kompressionskraft entlang der Fortschreitungslinie gepresst wird und so weiter bis ein Block (A, B, C, D, E), der aus den flach aufeinander gehefteten Platten besteht, gebildet ist.

8. Vorrichtung zum Aufeinanderheften von zwei oder mehr elastischen Platten (A, B, C, D, E) versehen mit einer ebenen Unterstützungsfläche (5), gekennzeichnet durch eine Aufhaltefläche (6) und einen Wagen (12), der auf eine Unterstützung (11), die parallel zur Unterstützungsfläche (5) ist, läuft, welcher Wagen (12) eine Unterstützungsfläche (14), die in ihrer Bewegungsrichtung geneigt ist und eine Druckwalze (1) hat, wobei eine Vorrichtung (7, 8, 9, 10) zum Erzeugen einer Kraft angeordnet ist, die mit einem Randteil (15) verbunden ist, der mit einem Rand einer Platte (E) zusammenarbeiten kann und auf die neigende Unterstützungsfläche (14) gleiten kann, wobei der Wagen im Stande ist unter einer Platte (E) die teilweise auf der geneigten Unterstützungsfläche liegt, weg zu bewegen.

9. Vorrichtung nach Anspruch 8, dadurch gekennzeichnet, dass der Wagen (12) mit einer Antriebsrolle (17) versehen ist, die den Wagen wegschiebt gegen die darauf liegende Platte (E).

10. Vorrichtung nach Anspruch 8 oder 9, dadurch gekennzeichnet, dass der Wagen (12) ein Blasemundstück (16) oder einen Strahlungskörper hat zum Erhitzen der Unterseite der Platte (E), die auf dem Wagen (12) liegt und der Oberseite der Platte (D) die darunter liegt, derart dass die Platten (E, D) erhitzt sind wenn sie einander berühren.

11. Vorrichtung nach einem oder mehreren der vorangehenden Ansprüchen, dadurch gekennzeichnet, dass die Unterstützungsfläche (5) und die Unterstützung (11) auf welche der Wagen läuft einstellbar zu einander sind in der Richtung senkrecht zur Unterstützungsfläche (5).

12. Vorrichtung nach einem oder mehreren der vorangehenden Ansprüchen 8-11, dadurch gekennzeichnet dass eine Druckwalze (1) vertikal beweglich an dem genannten Wagen (12) befestigt ist.

13. Vorrichtung nach einem oder mehreren der vorangehenden Ansprüchen 8-11, dadurch gekennzeichnet dass eine Druckwalze (1) fest an dem genannten Wagen (12) befestigt ist.

**Revendications**

1. Procédé pour solidariser des plaques (E, D) en matériau élastique, dans lequel les plaques ont leur surface emboîtée entre elles pour réaliser une adhérence et sont comprimées l'une contre l'autre afin qu'une plaque au moins (E) soit soumise à une déformation (e2, e4) par rapport à la forme qu'elle prend quand elle ne subit aucun effort à une température prédéterminée du fait de la pression avec laquelle elle est comprimée contre l'autre plaque (D) et/ou du chauffage de sa surface orientée vers l'autre plaque (D), laquelle déformation diffère de celle (e3, e5) que créent les mêmes causes dans la surface de l'autre plaque orientée vers elle, caractérisé par le fait qu'en plus ces forces sont exercées dans une direction de la surface des plaques de façon que lesdites déformations sont mutuellement égales.

2. Procédé selon la revendication 1, caractérisé par le fait que si les déformations sont des élongations, une force de compression est exercée sur la plaque (E) ayant l'élongation la plus grande de la surface correspondante.

3. Procédé selon l'une des revendications 1 ou 2, dans lequel une plaque (E) est appliquée à l'état coudé vers l'autre plaque et progressivement comprimée sur l'autre plaque, caractérisé par le fait qu'une force de compression est exercée sur la plaque courbée dans la direction qui suit la ligne de progression.

4. Procédé selon l'une des revendications 1, 2 ou 3, caractérisé par le fait que les forces exercées additionnellement sont créées par au moins un rouleau entraîné par friction (2, 17).

5. Procédé selon l'une quelconque des revendications précédentes, caractérisé par le fait qu'un élément poussoir (15) agit sur le bord d'une plaque (E).

6. Procédé selon l'une quelconque des revendications précédentes, caractérisé par le fait qu'un gaz chauffé est soufflé contre au moins une surface de plaque.

7. Procédé selon l'une quelconque des revendications précédentes, pour solidariser plusieurs plaques entre elles, caractérisé par le fait qu'une plaque (A) est soutenue à plat, une plaque (B) en position courbée est progressivement appliquée contre la première et sous l'effet d'une force de compression appliquée dans la direction de la ligne de progression jusqu'à ce que ces deux plaques (A, B) adhèrent entre elles, une troisième plaque (C) est progressivement appliquée sur la seconde (B) et comprimée sous l'effet d'une force de compression appliquée le long de la ligne de progression et ainsi de suite jusqu'à ce qu'un bloc (A, B, C, D, E) soit formé à partir de plaques fixées à plat l'une sur l'autre.

8. Dispositif pour solidariser entre elles deux ou plusieurs plaques (A, B, C, D, E) en matériau élastique, comprenant une surface support plan (5), caractérisé par un plan de butée (6) et un chariot (12) qui circule sur un support (11) parallèle à ladite surface de support (5), lequel chariot (12) possède une surface de support (14) inclinée dans sa direction de progression et un rouleau presseur (1), un dispositif (7, 8, 9, 10) pour générer une force étant installé de manière à être relié à un élément de bordure (15) qui peut coopérer avec un bord d'une plaque (E) et qui peut glisser sur la surface de support inclinée (14), le chariot étant capable de s'éloigner sous une plaque (E) partiellement posée sur la surface de support inclinée.

9. Dispositif selon la revendication 8, caractérisé par le fait que le chariot (12) comprend un rouleau d'entraînement (17) qui éloigne le chariot de la plaque (E) posée sur ce chariot.

10. Dispositif selon l'une des revendications 8 ou 9, caractérisé par le fait que le chariot (12) porte un ajutage soufflant (16) ou un radiateur pour chauffer la face inférieure de la plaque (E) reposant sur le chariot (12) et la face supérieure de la plaque (D) posée au-dessous, de façon que les plaques (E, D) soient chauffées quand elles s'emboîtent l'une dans l'autre.

11. Dispositif selon l'une quelconque des revendications précédentes, caractérisé par le fait que la surface de support (5) et le support (11) sur lequel circule le chariot sont réglables l'une par rapport à l'autre dans la direction perpendiculaire à la surface de support (5).

12. Dispositif selon une ou plusieurs des revendications 8-11 qui précèdent, caractérisé par le fait qu'un rouleau presseur (1) est fixé audit chariot (12) et mobile verticalement.

13. Dispositif selon l'une quelconque des revendications 8-11, caractérisé par le fait qu'un rouleau presseur (1) est attaché audit chariot (12) en position fixe.

FIG.1

FIG.2

FIG.3